# EUROPÄISCHE PATENTSCHRIFT

(11) **EP 1 277 632 B1**
(45) Veröffentlichungstag und Bekanntmachung des Hinweises auf die Patenterteilung: **29.11.2006**
(21) Anmeldenummer: 02015419.1
(22) Anmeldetag: 11.07.2002
(51) Int. Cl.: B60R 25/00, G07C 9/00

(54) **Verfahren zum fernbedienten Ver- und/oder Entriegeln eines Fahrzeuges**
Remote operation method for the locking and/or unlocking of a vehicle
Procédé de commande à distance pour le verrouillage et/ou le déverrouillage d'un véhicule

(30) Priorität: 17.07.2001 DE 10134837
(43) Veröffentlichungstag der Anmeldung: 22.01.2003
(73) Patentinhaber: Hella KGaA Hueck & Co., 59552 Lippstadt (DE)
(72) Erfinder: Bödeker, Klaus, 59555 Lippstadt (DE); Schrape, Jörg, 59556 Lippstadt (DE)

(56) Entgegenhaltungen:
- EP-A- 0 698 706
- EP-A- 0 870 654
- EP-A- 0 937 845
- DE-C- 4 227 887
- GB-A- 2 282 687

## Beschreibung

Die Erfindung bezieht sich auf ein Verfahren zum fernbedienten Ver- und/oder Entriegeln eines Fahrzeuges mit wenigstens einem mobilen fahrzeugbedienerseitigen Sender (einem sogenannten Funkschlüssel) und einem fahrzeugseitigen Empfänger. Nach einer Betätigung des Senders, die vom Bediener aktiv z.B. durch einen Tastendruck oder passiv z.B. über das Signal eines Näherungssensors ausgelöst werden kann, wird vom Sender ein verschlüsselter, geheimer Code in Form eines Datentelegramms an einen Empfänger im Fahrzeug übertragen. Der geheime Code ist dem Empfänger im Fahrzeug ebenfalls als Erwartungswert für den nächsten Codevergleich bekannt. Der Codevergleich findet im Empfänger statt, wobei der fahrzeugseitige Empfänger so definiert ist, daß er den Code-Vergleicher umfasst, auch wenn dieser nicht in einer Baueinheit mit anderen Komponenten des Empfängers integriert ist.

Um ein unbefugtes Ver- und/oder Entriegeln durch Abhören (Aufzeichnen) des gesendeten Codes und dessen anschließenden Missbrauch zu verhindern, wird ein sogenannter Wechselcode verwendet. Beim Wechselcode-Verfahren wird der gesendete Code bei jedem Mal geändert. Die Bestimmung (Berechnung) des jeweiligen Wechselcode erfolgt über einen geheimen Algorithmus, der sowohl im Sender als auch im Empfänger implementiert ist. Zur Wechselcode-Synchronisation weisen sowohl der Sender als auch der Empfänger einen Zähler für die bereits generierten Wechselcodes bzw. einen Speicher für den zuletzt benutzten Wechselcode auf. Damit ist es dem Empfänger möglich, den jeweils nächsten Wechselcode als Erwartungswert vorherzubestimmen. Ein derartiges Verfahren ist aus der EP 0 719 370 B1 bekannt. Die DE 4 227 887 offenbart also ein gattungsgemäßes Verfahren nach dem Oberbegriff des Anspruchs 1.

Nun sind jedoch auch Angriffe bekannt geworden, die das Wechselcode-Verfahren unsicher machen. Bei einem derartigen Angriff wird der fahrzeugseitige Empfänger durch einen Störsender des Angreifers so stark gestört, daß er das Datentelegramm mit dem Wechselcode nicht empfangen kann, gleichzeitig wird das Datentelegramm mit dem gültigen Wechselcode des Senders mit einem Abhörempfänger des Angreifers aufgezeichnet. Zu einem späteren Zeitpunkt, wenn der berechtige Bediener des Fahrzeuges sich von diesem entfernt hat, sendet der Angreifer das aufgezeichnete Datentelegramm mit dem Wechselcode wieder aus. Dieser Wechselcode wird vom fahrzeugseitigen Empfänger noch als gültig erkannt, da die Wechselcode-Synchronisation des Empfängers durch den Störsender unterbrochen wurde, woraufhin der Empfänger dann die entsprechende Aktion auslöst, z.B. die Entriegelung des Fahrzeuges.

Aufgabe der Erfindung ist es daher ein Verfahren zu schaffen, mit dem der vorstehend beschriebene Angriff vereitelt wird.

Diese Aufgabe wird erfindungsgemäß dadurch gelöst, daß der Sender und der Empfänger jeweils eine Uhr aufweisen, die untereinander synchronisiert sind. Im Sender wird aus der jeweils aktuellen Senderuhrzeit eine Zeitinformation abgeleitet, die dem zu sendenden Datentelegramm hinzugefügt wird. Im Empfänger wird diese Zeitinformation dann aus dem Datentelegramm extrahiert, wobei der Empfänger nur solche Datentelegramme als gültig bewertet, deren Zeitinformation in einem bestimmten Zeitfenster relativ zur jeweils aktuellen Empfängeruhrzeit liegt, wobei zwei oder mehr Sender mit jeweils einer Uhr verwendet werden, wobei im Empfänger für jede Senderuhrzeit eine korrespondierende Empfängeruhrzeit vorgesehen ist, welche mit der jeweiligen Senderuhrzeit synchronisiert ist, der Empfänger nur eine Uhr aufweist, wobei jeweils eine Senderspezifische Synchronisations-Zeitverschiebung einer bestimmten Senderuhr zu der einen Empfängeruhr ermittelt und in einer Tabelle abgelegt wird und die Zuordnung der jeweiligen Senderuhrzeit zu der korrespondierenden Empfängeruhrzeit anhand einer mit dem Datentelegramm gesendeten Senderkennung erfolgt, indem die jeweils senderspezifische Synchronisations-Zeitverschiebung anhand der Senderkennung gefunden wird.

Damit wird der vorstehend beschriebene Angriff wirkungsvoll verhindert, da auch bei einer Störung der Wechselcode-Synchronisation des Empfängers die Zeitsynchronisation erhalten bleibt. Wenn der Angreifer das aufgezeichnete Datentelegramm zu einem späteren Zeitpunkt wieder aussendet, so kann der Empfänger die Ungültigkeit des Datentelegramms selbst bei für ihn gültigen Wechselcode feststellen, da die im Datentelegramm enthaltende Senderuhrzeit außerhalb des vorgegebenen Zeitfensters relativ zur jeweils aktuellen Empfängeruhrzeit liegt. Das Zeitfenster liegt vorzugsweise größenordnungsmäßig im Sekundenbereich.

Das Datentelegramm wird mit anderen Worten mit einem Zeitstempel versehen, der eine fristgerechte Zustellung überprüfbar macht..

Anhand der beigefügten Zeichnung soll die Erfindung nachfolgend näher erläutert werden. Es zeigt:

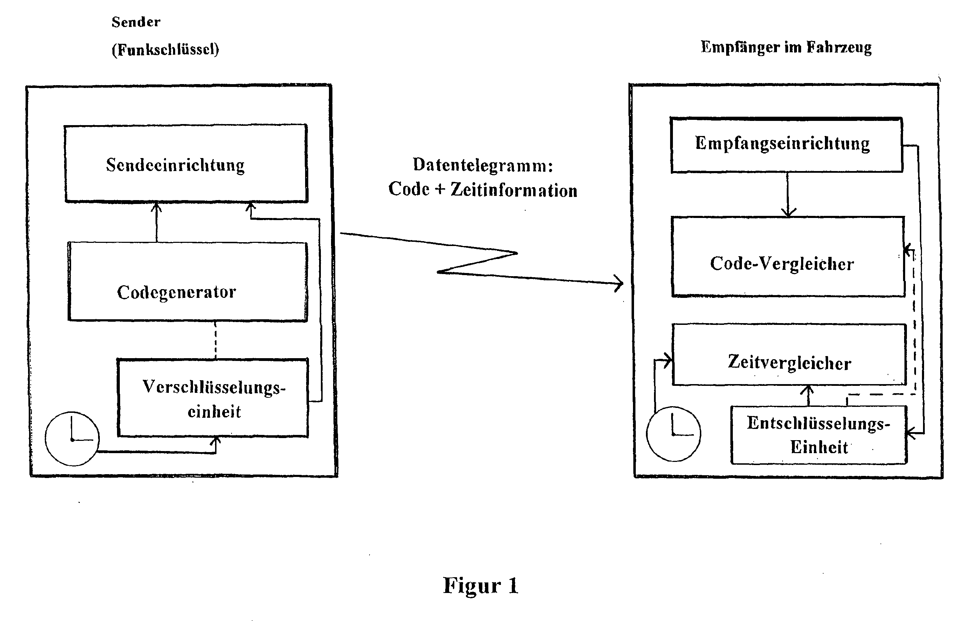

- Figur 1: ein Blockschaltbild von Sender und Empfänger,
- Figur 2: mehrere Sender mit jeweils eigenen Senderuhren sowie der korrespondierenden Zeitsynchronisation im Empfänger,

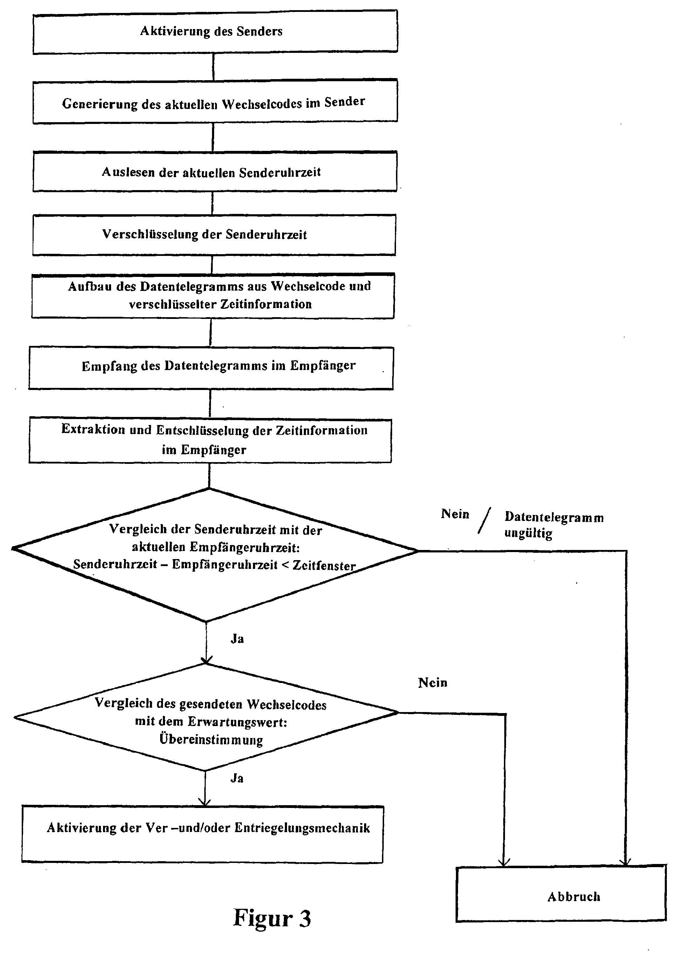

- Figur 3: ein Flussdiagramm zur Verdeutlichung des Verfahrensablaufes.

Der bedienerseitige Sender umfasst eine Sendeeinrichtung zum Aussenden des Datentelegramms. Bei dem Sender kann es sich um beispielsweise einen Funksender, einen IR-Sender oder um einen Ultraschall-Sender handeln, wobei die Sendeeinrichtung jeweils entsprechend ausgebildet ist. Darüber hinaus weist der Sender einen Code-Generator zur Berechnung des jeweils aktuellen Wechselcodes auf. Erfindungsgemäß weist der Sender nun auch eine vorzugsweise quarzgesteuerte Uhr auf. Sämtliche Komponenten des Senders sind vorzugsweise in einem Gehäuse, beispielsweise einem Funkschlüssel integriert.

Der Empfänger im Fahrzeug weist eine entsprechende Empfangseinrichtung zum Empfang des Datentelegramms und einen Code-Vergleicher auf, um den im Datentelegramm gesendeten Code mit dem Erwartungswert zu vergleichen. Erfindungsgemäß weist der Empfänger nun ebenfalls eine vorzugsweise quarzgesteuerte Uhr sowie einen Zeitvergleicher auf.

Die beiden Uhren (Senderuhr, Empfängeruhr) sind untereinander synchronisiert, damit ein Zeitvergleich durchgeführt werden kann. Verschiedene Arten der hier vorteilhaft anzuwendenden Synchronisation werden weiter unten beschrieben.

Das vom Sender erzeugte Datentelegramm umfasst neben dem Code nun auch eine Zeitinformation, die aus der Senderuhrzeit abgeleitet wird. Die Zeitinformation definiert im wesentlichen den Zeitpunkt zu dem das Datentelegramm erzeugt bzw. abgesendet wurde. Im Empfänger wird nun die Zeitinformation aus dem Datentelegramm extrahiert, wobei in einem Zeitvergleicher überprüft wird, ob der durch die Zeitinformation definierte Zeitpunkt innerhalb eines vorbestimmten Zeitfensters relativ zur Empfängeruhrzeit liegt. Nur wenn dies der Fall ist, wird das Datentelegramm als gültig akzeptiert. In diesem Fall findet anschließend ein Vergleich des gesendeten Codes mit dem Erwartungswert statt. Selbstverständlich kann der Code-Vergleich auch vor dem Zeitvergleich stattfinden oder sogar gleichzeitig. Wichtig ist, daß der Code-Vergleich und der Zeitvergleich ein positives Ergebnis liefern müssen, um eine Aktion (Ver-und/oder Entriegelung) auszulösen.

In einer besonders sicheren Ausführungsform wird die Zeitinformation verschlüsselt. In diesem Fall weist der Sender eine Verschlüsselungseinheit zur Verschlüsselung der Senderuhrzeit auf. Dementsprechend ist im Empfänger eine Entschlüsselungseinheit angeordnet. Durch die Verschlüsselung der Zeitinformation wird der Zeitstempel des Datentelegramms vor Manipulationen geschützt.

In einer Variante wird der Klartext-Datenstring der Zeitinformation für sich verschlüsselt und an den Code-Datenstring angehängt bzw. diesem vorangestellt.

In einer weiteren Variante der Zeitverschlüsselung dient die Zeitinformation als Encryption-Key für einen Verschlüsselungsalgorithmus, mit dem der Code verschlüsselt wird. Das Datentelegramm besteht dann aus einem verschlüsselten Datenstring. Zur Entschlüsselung wird dann im Empfänger aus dem erlaubten Zeitfenster eine Zeitinformation als Decryption-Key abgeleitet, mit dem dann der Code entschlüsselt wird.

In einer weiteren Variante der Zeitverschlüsselung dient die verschlüsselte Zeitinformation an sich als Wechselcode.

Zur Synchronisation von Senderuhr und Empfängeruhr sind verschiedene Möglichkeiten vorgesehen. Im einfachsten Fall werden die Senderuhr und die Empfängeruhr zum Beispiel bei der Auslieferung des Fahrzeuges synchron eingestellt. Falls die verwendeten Zeitnormale (Schwingquarze) hinreichend stabil sind im Vergleich zum Validierungs-Zeitfenster des Empfängers, so kann auf nachfolgende Synchronisationen verzichtet werden. Diese erstmalige (Initialisierungs-)Synchronisation kann automatisch erfolgen, in dem die Empfängeruhrzeit bei einer erstmaligen Betätigung des Senders in einem Initialisierungs-Datentelegramm auf die Senderuhrzeit eingestellt wird.

Falls die Langzeitstabilität der verwendeten Quarze nicht ausreichend ist, wird eine Nachsynchronisation durchgeführt. Zu diesem Zweck wird die Empfängeruhrzeit nach Empfang eines gültigen Datentelegramms anhand der in diesem Datentelegramm enthaltenen Zeitinformation entsprechend der Senderuhrzeit eingestellt. Diese Nachsynchronisation kann nach jedem gültigen Datentelegramm erfolgen oder jeweils nur nach einer bestimmten Anzahl von Datentelegrammen. Alternativ dazu kann die Nachsynchronisation auch über Funkzeitzeichen (z.B. vom Funkzeitzeichensender DCF 77) erfolgen, die vom Sender und vom Empfänger empfangen werden, wobei die Sender- und/oder die Empfängeruhrzeit entsprechend des Funkzeitzeichens eingestellt wird.

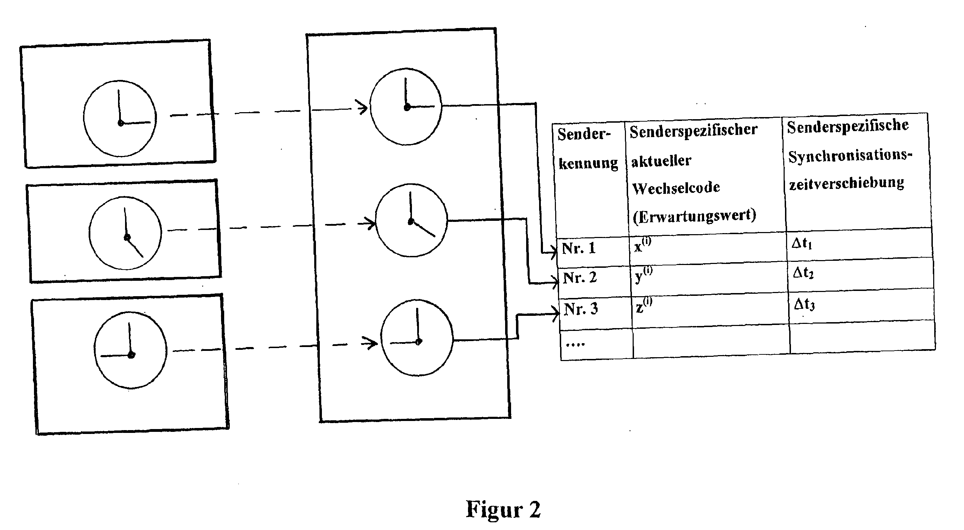

Falls für ein Fahrzeug zwei oder mehr Sender (Funkschlüssel) verwendet werden, von denen jeder erfindungsgemäß eine Uhr aufweist, ist im Empfänger für jede dieser untereinander nicht synchronen Senderuhrzeiten eine Empfängeruhrzeit vorgesehen, welche mit der jeweiligen Senderuhrzeit synchronisiert ist (vgl. Figur 2). Die Zuordnung der jeweiligen Senderuhrzeit zu der korrespondierenden Empfängeruhrzeit erfolgt vorzugsweise anhand einer Senderkennung (z.B. Seriennummer), die im Datentelegramm übertragen wird.

Für die Synchronisation des Empfängers mit mehreren Senderuhren können entsprechend der Anzahl der Senderuhren Empfängeruhren mit jeweils einem eigenen Zeitnormal (Quarz) vorgesehen sein. In einer besonders vorteilhaften Ausführungsform verfügt der Empfänger jedoch nur über ein quarzgesteuertes Zeitnormal, wobei die Synchronisation auf die verschiedenen Senderuhren bspw. über ein Software-Programm erfolgt, das die senderspezifische Synchronisations-Zeitverschiebung einer bestimmten Senderuhr zu der einen Empfängeruhr bestimmt und in einer Tabelle ablegt. In dieser Tabelle ist außerdem der senderspezifische aktuelle Wechselcode abgelegt. Die entsprechenden Einträge werden anhand der Senderkennung gefunden.

## Patentansprüche

1. Verfahren zum fernbedienten Ver- und/oder Entriegeln eines Fahrzeuges mit wenigstens einem mobilen fahrzeugbedienerseitigen Sender und einem fahrzeugseitigen Empfänger, wobei
- der Empfänger vom Sender einen Code in Form eines Datentelegramms empfängt,
- der gesendete Code im Empfänger mit einem Erwartungswert verglichen wird,
- der Empfänger im Fall der Übereinstimmung des gesendeten Codes mit dem Erwartungswert die Betätigung einer Ver- und/oder Entriegelungsmechanik aktiviert,
- der Sender und der Empfänger jeweils eine Uhr aufweisen, die untereinander synchronisiert sind,
- aus der jeweils aktuellen Senderuhrzeit eine Zeitinformation abgeleitet wird,
- diese Zeitinformation dem zu sendenden Datentelegramm hinzugefügt wird,
- der Empfänger die Zeitinformation aus dem Datentelegramm extrahiert,
- der Empfänger nur solche Datentelegramm als gültig bewertet, deren Zeitinformation in einem bestimmten Zeitfenster relativ zur jeweils aktuellen Empfängeruhrzeit liegt,
**dadurch gekennzeichnet, dass**
- zwei oder mehr Sender mit jeweils einer Uhr verwendet werden, wobei im Empfänger fiir jede Senderuhrzeit eine korrespondierende Empfängeruhrzeit vorgesehen ist, welche mit der jeweiligen Senderuhrzeit synchronisiert ist,
- der Empfänger nur eine Uhr aufweist,
- jeweils eine senderspezifische Synchronisations-Zeitverschiebung einer bestimmten Senderuhr zu der einen Empfängeruhr ermittelt und in einer Tabelle abgelegt wird,
- die Zuordnung einer jeweiligen Senderuhrzeit zu der korrespondierenden Empfängeruhrzeit anhand einer mit dem Datentelegramm gesendeten Senderkennung erfolgt, indem die jeweils senderspezifische Synchronisations-Zeitverschiebung anhand der Senderkennung gefunden wird.

2. Verfahren nach Anspruch 1,
**dadurch gekennzeichnet, daß**
die Empfängeruhrzeit bei einer erstmaligen Betätigung des Senders in einem Initialisierungs-Datentelegramm entsprechend der Senderuhrzeit eingestellt wird.

3. Verfahren nach Anspruch 1,
**dadurch gekennzeichnet, daß**
die Empfängeruhrzeit nach Empfang eines gültigen Datentelegramms anhand der in diesem Datentelegramm enthaltenen Zeitinformation entsprechend der Senderuhrzeit eingestellt wird.

4. Verfahren nach Anspruch 1 oder 2,
**dadurch gekennzeichnet, daß**
der Sender und/oder der Empfänger einen Funkzeitzeichenempfänger aufweist, wobei die Sender- und/oder die Empfängeruhrzeit entsprechend des Funkzeitzeichens eingestellt wird.

5. Verfahren nach einem der vorstehenden Ansprüche,
**dadurch gekennzeichnet, daß**
die im Datentelegramm gesendete Zeitinformation verschlüsselt übertragen wird und die verschlüsselte Zeitinformation im Empfänger entschlüsselt wird.

6. Verfahren nach Anspruch 5,
**dadurch gekennzeichnet, daß**
die Zeitinformation als Encryption-Key für einen Verschlüsselungsalgorithmus dient, mit dem der Code verschlüsselt wird.

7. Verfahren nach Anspruch 5,
**dadurch gekennzeichnet, daß**
die verschlüsselte Zeitinformation an sich als Code verwendet wird.

## Claims

1. Method for the remote-controlled locking and/or unlocking of a vehicle by means of at least one portable transmitter at the vehicle-user end and a receiver at the vehicle end, in which
- the receiver receives a code from the transmitter in the form of a data telegram,
- the transmitted code is compared in the receiver with an expected value,
- if the transmitted code agrees with the expected value, the receiver initiates operation of a locking and/or unlocking mechanism,
- the transmitter and the receiver each have a clock, said clocks being synchronized with one another,
- an item of time information is derived from the current time on the clock at the transmitter end,
- this time information is added to the data telegram to be transmitted,
- the receiver extracts the time information from the data telegram,
- the receiver only rates as valid a data telegram containing time information which lies within a given time window relative to the current time on the clock at the receiver end,
**characterized in that**
- two or more transmitters each having a clock are used, in which case, in the receiver, for each transmitter clock time a corresponding receiver clock time is provided which is synchronized with the respective transmitter clock time,
- the receiver only has one clock,
- a transmitter-specific synchronization time shift in respect of each particular transmitter clock relative to the one receiver clock is determined and placed in a table,
- a particular transmitter clock time is associated with the corresponding receiver clock time on the basis of a transmitter identification signal sent with the data telegram, **in that** the respective transmitter-specific synchronization time shift is found on the basis of the transmitter identification signal.

2. Method according to Claim 1,
**characterized in that**,
when the transmitter is operated for the first time, the receiver clock time is set in accordance with the transmitter clock time in an initializing data telegram.

3. Method according to Claim 1,
**characterized in that**,
upon reception of a valid data telegram and based on the time information contained in said data telegram, the receiver clock time is set in accordance with the transmitter clock time.

4. Method according to Claim 1 or 2,
**characterized in that**
the transmitter and/or the receiver has a radio time signal receiver, the transmitter clock time and/or the receiver clock time being set in accordance with the radio time signal.

5. Method according to one of the preceding claims,
**characterized in that**
the time information transmitted in the data telegram is sent in code and the encoded time information is decoded in the receiver.

6. Method according to Claim 5,
**characterized in that**
the time information serves as encryption key for an encoding algorithm, with which the code is encoded.

7. Method according to Claim 5,
**characterized in that**
the encoded time information in itself is used as the code.

## Revendications

1. Procédé de verrouillage et/ou de déverrouillage télécommandé d'un véhicule, comportant au moins un émetteur mobile côté utilisateur du véhicule et un récepteur côté véhicule, dans lequel
- le récepteur reçoit de la part de l'émetteur un code sous forme d'un télégramme de données,
- le code émis est comparé dans le récepteur à une valeur escomptée,
- en cas de concordance du code émis avec la valeur escomptée, le récepteur active l'actionnement d'un mécanisme de verrouillage et/ou de déverrouillage,
- l'émetteur et le récepteur présentent chacun une horloge, ces horloges étant synchronisées l'une à l'autre,
- une information de temps étant dérivée de l'heure d'émetteur actuelle respective,
- cette information de temps est ajoutée au télégramme de données à émettre,
- le récepteur extrait l'information de temps hors du télégramme de données,
- le récepteur n'évalue comme étant valables que des télégrammes de données dont l'information de temps est située dans une fenêtre de temps déterminée par rapport à l'heure de récepteur actuelle respective,
**caractérisé en ce que**
- deux émetteurs ou plus sont utilisés avec chacun une horloge, et pour chaque heure d'émetteur une heure de récepteur correspondante est prévue dans le récepteur, laquelle est synchronisée à l'heure d'émetteur respective,
- le récepteur ne présente qu'une horloge,
- un décalage horaire de synchronisation spécifique à l'émetteur, d'une horloge d'émetteur déterminée, est déterminé par rapport à ladite une horloge de récepteur et déposé dans un tableau,
- l'attribution d'une heure d'émetteur respective par rapport à l'heure de récepteur correspondante a lieu à l'aide d'une identification d'émetteur émise avec le télégramme de données, en trouvant le décalage horaire de synchronisation spécifique à l'émetteur à l'aide de l'identification d'émetteur.

2. Procédé selon la revendication 1, **caractérisé en ce que** le temps de récepteur est réglé en actionnant une première fois l'émetteur dans un télégramme de données d'initialisation correspondant à l'heure d'émetteur.

3. Procédé selon la revendication 1, **caractérisé en ce que** l'heure de récepteur est réglée après réception d'un télégramme de données valide à l'aide de l'information de temps contenue dans ce télégramme de données en fonction de l'heure d'émetteur.

4. Procédé selon la revendication 1 ou 2, **caractérisé en ce que** l'émetteur et/ou le récepteur présente un récepteur de signal horaire radio, l'heure d'émetteur et/ou l'heure de récepteur étant réglée en fonction du signal horaire radio.

5. Procédé selon l'une des revendications précédentes, **caractérisé en ce que** l'information de temps émise dans le télégramme de données est transmise de manière chiffré et l'information de temps chiffrée est déchiffrée dans le récepteur.

6. Procédé selon la revendication 5, **caractérisé en ce que** l'information de temps sert de clé de chiffrage pour algorithme de chiffrage avec lequel le code est chiffré.

7. Procédé selon la revendication 5, **caractérisé en ce que** l'information de temps chiffrée est utilisée en soi à titre de code.
